Europäisches Patentamt

European Patent Office

Office européen des brevets

(11) Publication number: **0 251 785 B1**

# EUROPEAN PATENT SPECIFICATION

(45) Date of publication of patent specification: **04.08.93**　(51) Int. Cl.⁵: **H02P 6/02**

(21) Application number: **87305839.0**

(22) Date of filing: **01.07.87**

(54) **Electric motor control method and apparatus.**

(30) Priority: **01.07.86 US 880754**

(43) Date of publication of application:
**07.01.88 Bulletin 88/01**

(45) Publication of the grant of the patent:
**04.08.93 Bulletin 93/31**

(84) Designated Contracting States:
**AT BE CH DE ES FR GB GR IT LI LU NL SE**

(56) References cited:
**EP-A- 0 183 277**

**PATENT ABSTRACTS OF JAPAN vol. 11, no. 265 (E-535)(2712) 27th August 1982; & JP - A - 62 068 092 (SANYO) 27.03.1987**

**PATENT ABSTRACTS OF JAPAN vol. 10, no. 54 (E-385)(2111) 4th March 1986; & JP - A- 60 207 489 (MATSUSHITA)**

(73) Proprietor: **Conner Peripherals, Inc.**
**2221 Old Oakland Road**
**San José California 95131(US)**

(72) Inventor: **Squires, John P.**
**5567 Lefthand Canyon Drive**
**Jamestown Colorado 80455(US)**
Inventor: **Shrinkle, Louis J.**
**7267 Olde Stage Road**
**Boulder Colorado 80302(US)**

(74) Representative: **Tomlinson, Kerry John et al**
**Frank B. Dehn & Co. European Patent Attorneys Imperial House 15-19 Kingsway**
**London WC2B 6UZ (GB)**

## Description

BACKGROUND OF THE INVENTION

The present invention is directed to DC motors, and is applicable for example to control of a polyphase, brushless DC motor used to move magnetic media, such as a disk of a hard-disk system, past a read/write element, such as a head, such as used in the technology known as Winchester Drives.

It is well known that conventional DC motors, including polyphase, brushless DC motors to which the present invention is directed, are highly efficient, and possess characteristics that make them suitable for a number of applications. In particular, brushless DC motors, which are particularly efficient, are favored as the moving force for such apparatus as rotating a mirror for laser printers, moving magnetic tape past a read/write head, or rotating the disk surface of hard-disk systems past a read/write head.

Polyphase, brushless DC motors require application of currents to stator or field windings in sequential order to produce torque-inducing flux for moving a rotor. DC currents are alternately switched about the Field windings to create various current paths that produce magnetic flux orientations in a synchronized fashion. The magnetic flux so produced results in a torque on the motor that causes rotational movement. In order to ensure that current is applied to the proper motor phase, (i.e., the most appropriate current path is selected through the winding of the stator) in order to produce a torque at the most beneficial time, various sensing devices are used to provide positional information about the rotor.

One such device is a Hall effect device or "Hall switch", although other devices, such as optics, can be used. One problem with these sensing devices is that they are more prone to failures than the devices with which they are used, thereby significantly affecting the overall reliability of the apparatus that incorporates the sensing device. Additionally, incorporating these sensing devices in the motor structure itself increases the motor's size, cost, complexity and power consumption--features not normally desirable.

It can be seen, therefore, that a significant improvement in motor design can be achieved if some other way were found to provide feedback information as to the rotational position of the rotor of a polyphase DC motor, without incorporating extra apparatus in the motor structure itself.

One method is disclosed in EP-A-0183277, in which a continuous RF frequency signal is applied to the neutral connection point of the motor phase windings, and the relative occurrence of voltage levels across sense resistors are used to adjust motor commutation timing. This system, however, requires a further connection to be made at the neutral point.

There is disclosed herein a method, and apparatus for implementing that method, for developing feedback information concerning the rotational position of the rotor without the use of sensing devices built into the motor structure itself. The method, as implemented, provides a highly reliable and inexpensive feedback mechanism, that allows the motor structure to be reduced in size, complexity and cost, and to operate on less power than heretofore attained.

According to the invention, there is provided a brushless DC motor having multiple stator windings, a rotor and apparatus for controlling ordered application of electrical current to the windings, said apparatus comprising:

circuit means coupled to the stator windings for selectively creating current paths therethrough in response to control signals;

sensing means coupled to the DC motor for producing a sense signal indicative of current conducted by the DC motor; and

control means coupled to the circuit means and to the sensing means for providing the control signals in a manner to cause current to flow through current paths selectively formed by the circuit means in response to the control signals, to effect rotation of the rotor; characterised in that

the control means includes means for producing control signals to cause the selective application of short current pulses to the stator windings and for monitoring the sense signal to determine which of the current pulses produces a highest amplitude sense signal relative to those of the other current pulses, the control means being operable in response to said determination to provide predetermined control signals to the circuit means.

Furthermore, according to the invention, there is provided a method for initiating and controlling the rotation of a rotor of a brushless DC motor of the type having multiple stator windings, related as phases, for conducting torque-producing current therethrough, characterised by the steps of:

sequentially powering each phase of the DC motor for a short predetermined time period;

obtaining a peak amplitude value of the current conducted by the motor when a phase is powered during each corresponding short predetermined time period:

determining a one peak amplitude value having a magnitude greater than the other peak amplitude values; and

applying a torque-producing current to the DC motor in a phase determined by the determined one peak amplitude value.

The preferred embodiment provides two alternative techniques for developing rotor position information, during initial start-up (i.e., from dead-stop to some RPM), and a third technique that can be used to maintain a desired speed of the disk of a hard-disk system by drawing position information from information written on the disk. In the preferred version of the invention, a polyphase, brushless DC motor is controlled in the environment of a hard-disk system. The motor drives a hard-disk, and all three techniques are used--in effect creating three zones of operation. A first zone utilizes one technique of the method to initiate rotation of the rotor from a static position to a first predetermined rotational speed or RPM. A second technique of the method is used to increase the rotational speed of the rotor from the first predetermined RPM to the desired RPM. Thereafter, using the third technique, information on the media being rotated by the motor is used to supply the necessary feedback information.

According to the preferred embodiment of the invention, the three-phase brushless DC motor used to drive the hard-disk (or disks if more than one) of a hard-disk system is supplied with currents by a drive circuit that is operated by a microprocessor. Current through the motor is monitored by the microprocessor. During the first zone of motor operation, from 0 RPM to a first rotational speed, a high-frequency commutation, consisting of a short current pulse for each motor phase, is applied to the motor, and the motor current response to each pulse monitored. In response to this high-frequency commutation, the motor current responds with a corresponding number of pulses, one for each phase. It has been discovered that the amplitude of one of these motor current pulses will be greater than the rest, and that the motor phase producing this higher amplitude current indicates rotor position. Accordingly, the microprocessor determines which phase produced the highest motor current amplitude, and from that information, the microprocessor operates the drive circuit to provide a sustained torque-producing current that is applied to a phase (determined as described) for a fixed time, followed by another high-frequency commutation, followed again by another sustained torque-producing current, and so on until the first predetermined speed is attained.

Although this first technique, outlined above, could be used to bring the motor to full speed, it has been found to be more efficient to use a second technique: The microprocessor, upon determining that this first predetermined speed is reached, switches to the second technique. At this point in time, the microprocessor has, for the moment, information as to the rotational position of the rotor and to which next few motor phases current should be applied. The motor current monitoring is continued (which is now indicative of the back-EMF produced by the motor) and compared to a predetermined limit as torque-producing current is applied to each phase of the motor. As the rotor nears the stable position corresponding to the motor phase to which torque-producing current is applied, the back-EMF substantially decreases, allowing motor current to increase. Accordingly, when the monitored current exceeds the predetermined limit, application of the torque-producing current is switched from the present motor phase to the next sequential motor phase, and the process continued until full speed attained. At that time, the monitoring operation switches to reading predetermined, spaced sector marks on the disk media, installed during the time of assembly of the disk structure, and used to supply feedback information for controlling and maintaining motor speed at the desired value.

A number of advantages are obtained by the present invention, which should be evident to those skilled in this art. In addition to removing sensing devices from the motor structure itself, thereby allowing the motor size, cost, etc. to be reduced, the present invention is capable of accommodating a variety of DC motors with varying characteristics. This advantage permits manufacturing costs to be further reduced since manufacturing specifications can range wider than before.

These and other advantages of the present invention will be readily evident to those skilled in this art upon a reading of the following detailed description of an exemplary embodiment, which should be taken in conjunction with the accompanying drawings.

BRIEF DESCRIPTION OF THE DRAWINGS

Fig. 1 is a simplified block diagram of a microprocessor and associated circuitry used to implement the present invention for controlling a polyphase brushless DC motor;

Fig. 2 is a detailed schematic diagram of the spin-motor driver used in the block diagram of Fig. 1 to apply torque-producing currents to the motor in response to commands from the microprocessor;

Fig. 3 is a motor speed curve, illustrating the different zones of operation of the present invention;

Fig. 4 is a diagrammatic illustration of the high-frequency commutation produced by the invention during the first zone of operation;

Fig. 5 is an illustration of different motor currents encountered during the second mode of operation of the invention;

Figs. 6A-C are flow charts that describe the three zones of operation of the method of the present invention; and

Fig. 7 is a representation of one surface of the magnetic media driven by the present invention to illustrate feedback information recorded thereon.

DETAILED DESCRIPTION

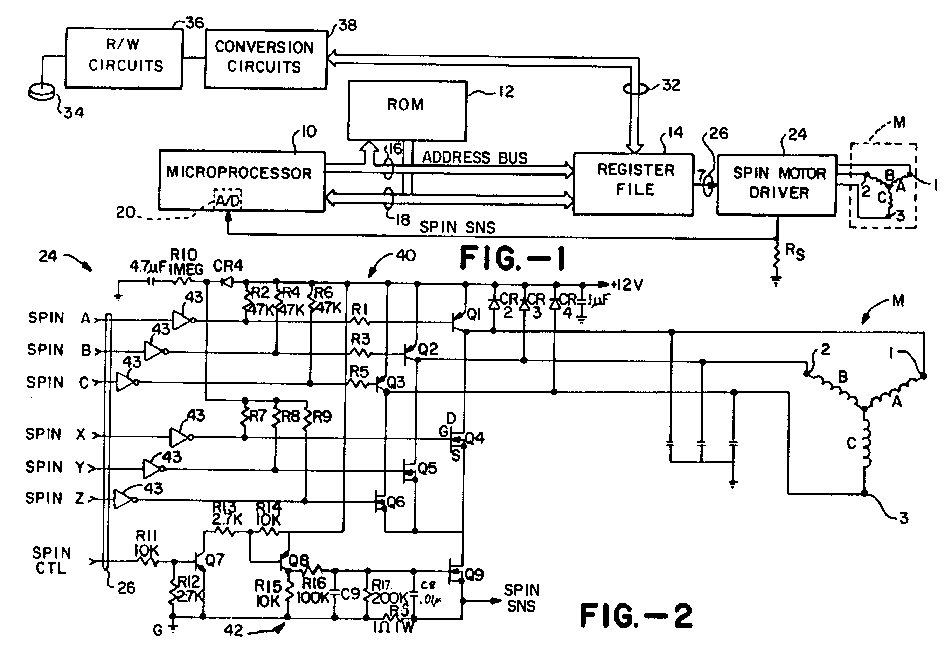

The present invention is used to operate a polyphase, brushless DC motor, such as is illustrated in Fig. 1 with the reference letter M. Typically, and herein, current is caused to flow through the coils A, B, C of the stator of the motor M by applying to one of the nodes 1, 2, 3 one voltage, connecting another one of the nodes 1, 2, 3 to a second voltage (usually ground), and leaving the remaining node unaffected. Thus, for example, if a positive voltage is applied to the node 3 and node 2 is coupled to ground, current will flow from node 3 to node 2 through the coils C and B in one "phase" of the motor M. Similarly, if a positive voltage is applied to node 1, ground applied to node 3, and node 2 left unaffected, current is applied to the motor M.

In a three-phase DC motor, such as described herein there are six available phases (i.e., six current paths through the coils A, B and C) capable of positioning the rotor (not shown) of the motor M in a stable position. For each such phase, there are two stable rotor positions.

The construction of the motor M itself is not unique; it is constructed in accordance with conventional and well-known techniques and materials, (having a brushless, or commutatorless design using a stator supporting multiple field or phase windings opposite permanent magnetic pole pieces supported by the rotor; the torque-inducing action of the phase currents effecting rotor movement by generating electromagnetic fields that interact with the permanent magnetic fields of the respective rotor poles), with one exception: There are no sensing devices, such as Hall switches or the like,to provide feedback information concerning the rotational position of the rotor. Rather, that information is supplied by the methods of the present invention, which will now be described.

As Fig. 1 illustrates, a microprocessor 10 is coupled to a read-only memory (ROM) 12 and a register file 14 by an address bus 16 and a data bus 18. The microprocessor 10 is manufactured by Motorola, Inc., and identified by the Part No. MC68HC11. A description of microprocessor 10 can be found in "Motorola Technical Data Handbook. MC68HC11A8," 197 5 Edition, published by Motorola, Inc. The interesting feature of the microprocessor, insofar as is of concern herein, is that it includes an on-board analog-to-digital (A/D) converter 20, the use of which will be described hereinafter.

The register file 14, insofar as is of concern herein, consists primarily of registers for holding control information that is applied to a spin-motor driver 24 in the form of control signals that are communicated thereto on seven signal lines 26. In response to the control signals, the spin-motor driver operates to switch application of a positive voltage and ground to various pairs of the nodes 1, 2, 3 of the motor M (leaving a third node attached to a high impedance), as briefly described above. The current through the motor M, during the time a positive voltage and ground are applied thereto, develops a voltage across a sense resistor $R_s$ that forms a spin sense (SPIN SNS) signal. As will be seen, the SPIN SNS signal includes information indicative of the rotational position of the rotor (not shown) of the motor M. Accordingly, the SPIN SNS signal is applied to the A/D 20 of the microprocessor 10, producing digital information used by the microprocessor 10 to control motor operation via the control signals applied to the spin-motor driver 24 via the signal lines 26.

As Fig. 1 also illustrates, the register file 14 is connected to conversion circuits 38 via an eight-bit bus 32. Conversion circuits 38 are, in turn, connected to a read/write head 34 via read/write (R/W) circuits 36. Additional registers (not shown) are contained in the register file 14 to buffer data communicated between the microprocessor 10 and the conversion circuits 38.

As indicated above, the present embodiment is used in connection with a hard-disk drive using Winchester technology (technology in which the heads do not come into contact with the magnetic media; rather, the heads "fly" on a cushion of air that separates the heads from the media). Since the present invention is directed only to control of the motor used to spin the disk media, only that portion of the hard-disk system germane to the present invention is illustrated and discussed.

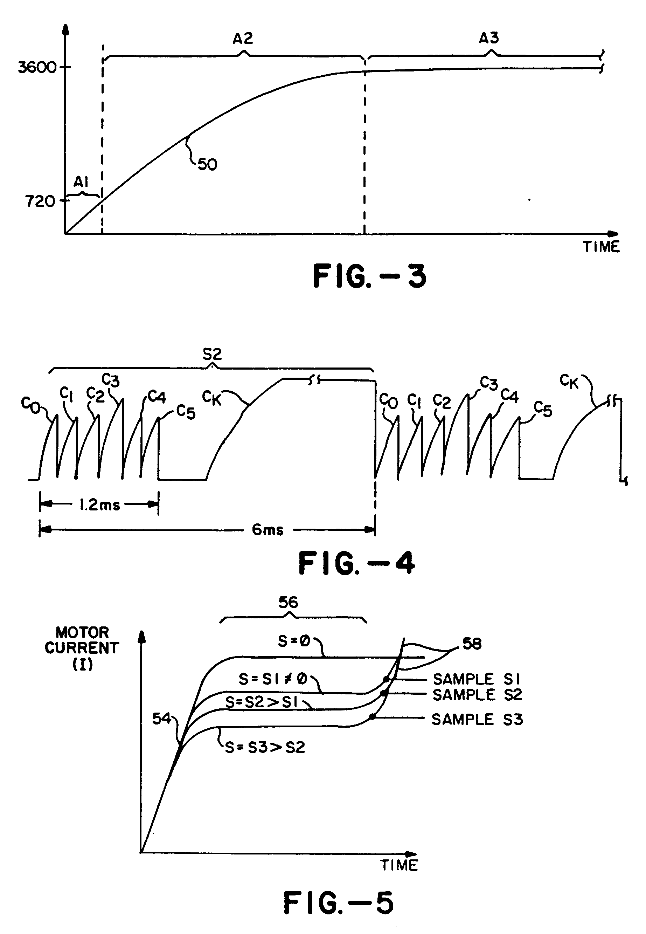

Turning now to Fig. 2, the construction of spin-motor driver 24 is illustrated in greater detail. Spin motor driver 24 includes two major sections: A switching section 40, which receives control signals SPIN A, B, C, X, Y and Z that effect switching of a positive voltage (+12V) and ground potential between pairs of the nodes 1, 2, 3 of the motor M; and a current control or limit section 42 that converts a pulse-width-modulated digital signal to a voltage for controlling the amplitude of the current applied to whatever phase (i.e., pairs of nodes 1, 2, 3)of the motor M selected by the switching section 40 (in response to the control signals SPIN A, ..., Z). The current control portion 42 includes the sense resistor $R_s$, producing the SPIN SNS signal.

Referring first to the switching section 40, the control signals SPIN A, B and C are coupled through inverter/buffer amplifiers 43 to the base leads of PNP transistors Q1, Q2 and Q3, which have their emitter leads connected to the positive DC supply voltage (+12V), and their collectors respectively connected to the motor nodes 1, 2, 3 and to high-current handling field-effect transistors (FETs) Q4, Q5, Q6.

Similarly, the control signals SPIN X, Y and Z, are coupled, via inverter/buffer amplifiers 43, to the gates of the FETs Q4, Q5 and Q6. FETs Q4, Q5 and Q6 function, in response to the received control signals, to alternately switch ground potential (through the FET Q9 of the limit circuit 42) to other of the motor nodes 1, 2, 3.

Turning now to the limit circuit 42, the control signal spin control (SPIN CTL) is received at the base of an NPN transistor Q7 that forms a part of an amplifier supplying current drive to an integrator comprising the PNP transistor Q8, resistors R16 and R17, and capacitors C8 and C9. When received, the SPIN CTL signal operates to produce a positive-going ramp at the gate of limit transistor, FET Q9, during the time that the SPIN CTL signal is present or HIGH. When the SPIN CTL signal goes LOW, the voltage ramp applied to the gate of FET Q9 reverses direction and diminishes at approximately the same rate it rose.

Operation of the spin-motor driver 24 is in response to the control signals SPIN A, B, C, X, Y and Z: Assume that a current is desired to be caused to flow through the coils A and C from node 1 to node 3, to induce a particular torque-producing motion. The control signal SPIN A is brought HIGH (to, via the amplifier 43, pull the base lead of the transistor Q1 LOW, causing the positive DC voltage (+12V) to be applied to node 1 of the motor M. At the same time, the SPIN Z control signal is brought LOW to place the FET Q6 in conduction, effectively connecting node 3 of motor M to ground G potential through the limit transistor Q9 and sense resistor $R_s$. The control signals SPIN B and C remain LOW, and X and Y remain HIGH, leaving transistors Q2 and Q3 and FETs Q4, Q5 in non-conducting, high-impedance states.

When a current path through the motor M is selected by switching section 40, the SPIN CTL signal is applied to regulate the amount of current conducted through the coils A and C via the FET Q9, which is also the current that passes through the sense resistor $R_s$ to produce the SPIN SNS signal.

Referring briefly to Fig. 3, the curve 50 shown generally represents motor speed from a static condition to the full-speed operation (3600 RPM). Fig. 3 is presented to illustrate the three zones of control, each of which utilizes one of the three different control techniques. Zone A1 brings the motor M from a standing start to approximately 20% of full-speed operation (i.e., 720 RPM). Zone A2 brings the motor speed from 720 RPM to the full speed of 3600 RPM. Zone A3 is the maintenance zone, maintaining the 3600 RPM rotational speed of the motor M.

Fig. 4 illustrates the response of the SPIN SNS signal to cycles of high-frequency commutation, comprising application of a short (200 microseconds ($\mu$s)) pulse of current to each of the six motor phases, followed by a sustained (for 4.8 milliseconds (ms)) application of current to a motor phase determined from examination of the responses $C_\emptyset$, ..., $C_5$.

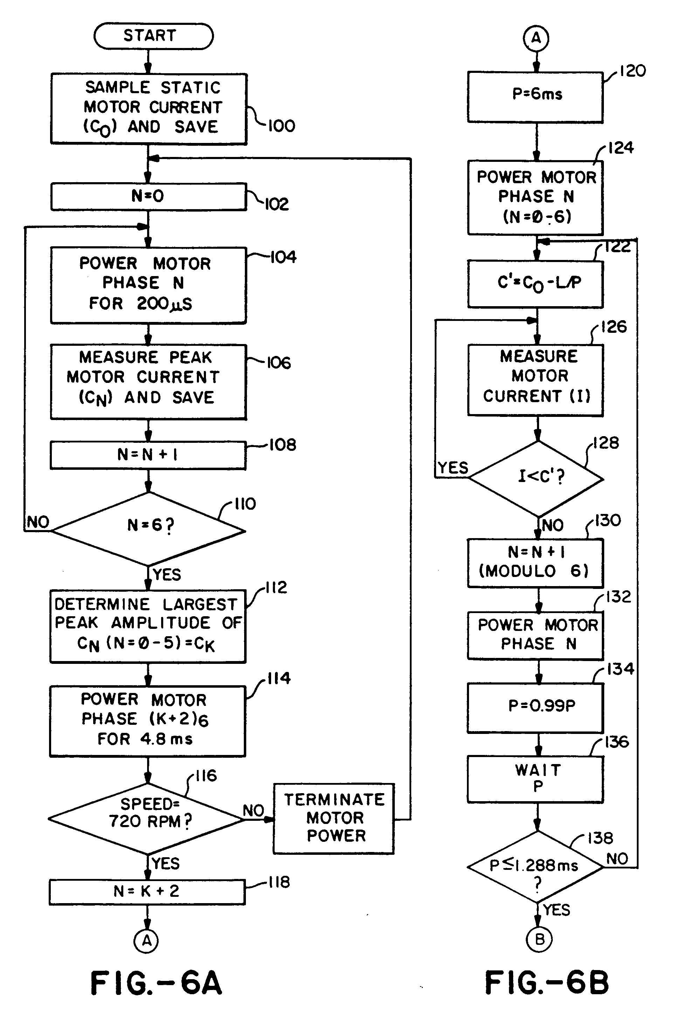

Although described more fully below with respect to the flow diagram of Figs. 6A-C, the control proceeds broadly in the following manner: Each of the six motor phases ($P_0$-$P_5$) has a short pulse of current applied thereto, resulting for each applied pulse in the current pulses $C_\emptyset$, ..., $C_5$ contained in SPIN SNS (Fig. 4). One responsive current pulse $C_\emptyset$, ..., $C_5$ will have an amplitude greater than the others. The current pulses are monitored by the microprocessor 10, which determines the peak amplitude of each current pulses and compares them to one another, determining which has the greatest amplitude. This identifies the phase position of the rotor, so that the high-frequency commutation is followed by application of a torque-producing current applied to the appropriate motor phase. Fig. 4 illustrates determination, from the response to the high-frequency commutation (i.e., current pulses $C_\emptyset$, ..., $C_5$) that the rotor is indicated as being in a phase 3 position; thus, the torque-producing current that follows will be current applied to phase 5.

At a motor speed of approximately 720 RPM (20% of the desired full-speed value of 3600 RPM), the second technique of the invention is utilized to synchronize application of torque-producing current to the different phases. During zone A2 operation, the microprocessor continues to monitor the SPIN SNS signal, first comparing it to a previously sampled value, later to a readjusted value, to determine when to switch the current from one phase to the next sequential phase of the motor M. Illustrated in Fig. 5 is a generalized representation of motor current (through $R_s$) with respect to time, showing a static motor current (S = $\emptyset$), and other motor current curves at different rotational speeds (S = S1, S = S2 > S1, and S = S3 > S2). When the rotor is moving, the SPIN SNS signal, developed across $R_s$ in response to a torque-producing current applied to any particular motor phase, has three major portions: A first rising portion 54, followed by a relatively stable portion 56, followed by a second rising portion 58. As will be seen, the second rising portion tells the microprocessor 10 when to switch the current applied by the spin motor drive 24 to the next sequential phase of motor M.

With reference to Figs. 6A-C, together with Figs. 1, 2 and 4, the microprocessor initiates motor operation in the following manner: At step 100 (Fig. 6A) the microprocessor 10 forms an appropriate control word, and communicates that control word for storage in the register file 14. The stored control word forms control signals that are communicated on the seven (7) signal lines 26 to the spin motor driver 24, causing the switching section 40 to select a phase of motor M (presently in its static, non-rotating state), while the SPIN CTL signal selects a current level. A voltage curve generally of the shape shown in Fig. 5 (S = 0) is developed across the sense resistor $R_s$, and sampled by the microprocessor 10 and stored in an internal register (not shown) as a value $C_0$.

Next, in step 102, an internal counter (not shown) of microprocessor 10 is loaded with a counter value (N) of ∅. This counter value (N), as will be seen, will define motor phase to which current is to be applied.

Steps 104, 106, 108 and 110 form the routine performed by the microprocessor 10 for high-frequency commutation of the motor M, the result of which is illustrated in Fig. 4 by the current pulses $C_∅$, ..., $C_5$. At step 104 current is applied to the phase determined by the counter value N for approximately 200 μs. The SPIN SNS signal is monitored for a peak motor value by the microprocessor 10, and that peak value for that particular phase ($C_n$) is saved. At step 108, the counter value N, i.e., the value that identifies phase, is incremented, and at step 110, the determination is made as to whether or not all six of the motor phases have had a 200 μs current pulse applied. If not, steps 104, 106, 108 and 110 are repeated.

When it is determined that all six phases of the motor M have experienced application of the 200 μs pulses of current, operation proceeds to step 112, in which the microprocessor 10 determines which of the measured amplitudes of SPIN SNS is greater than the others. With this information, which is indicative of the position of the rotor in one of the two phase-related stable positions, the microprocessor 10 can select the most appropriate phase of the motor for application of a sustained (for approximately 4.8 ms) torque-producing current.

In the example illustrated by Fig. 2, the high-frequency commutation of the six phases of the motor M will produce the current pulses $C_0$, ..., $C_5$ and the microprocessor 10 will find, from comparison of the amplitudes of the current pulses $C_0$, ..., $C_5$ that current pulse $C_3$ is greater than the rest, indicating that the rotor (not shown) of motor M is in one of the two phase 3 stable positions. Accordingly, maximum torque for the motor, as is well-known in this art, will require application of a current to phase 5 of the motor (i.e., K, indicating motor phase, is 5).

The cycle of high-frequency commutation current pulses $C_0$, ..., $C_5$, followed by a sustained current (4.8 ms) to phase K (K being determined by the largest amplitude current pulse, as indicated above) continues. Initially, from no rotation, the rotor will not move and, therefore, as indicated in Fig. 4, initially, for the first few cycles, one particular phase-related current pulse $C_k$ will be greater in magnitude (as Fig. 4 illustrates, K = 5). Ultimately, however, the rotor (not shown) of the motor M will begin to rotate and other current pulses will begin sequentially assuming amplitudes greater than their mates, although lower speed groups of the cycles 52 will see these same current pulse having a greater amplitude than the others. Shortly, however, the rotor will attain a rotational speed from phase-related position to phase-related position that begins to equal the period of the cycle 52 (i.e., approximately 6 ms). During this zone A1 (Fig. 3) operation, the microprocessor 10 can track motor speed from the period-to-period changes of the current pulses.

Accordingly, the microprocessor performs, at step 116 (during the 4.8 ms period a torque-producing current is applied to the previously determined phase K), a check of motor speed. If the motor speed is below a predetermined rotational velocity (here, 720 RPM), the microprocessor will wait for the conclusion of the 4.8 ms period, and terminate the motor current to phase K, and return to step 102 to perform another cycle 52 of high-speed commutation, followed by a torque-producing current (i.e., steps 102-116).

If, on the other hand, it is found during step 116 that the motor speed has attained (or exceeded) the first predetermined speed, the first zone A1 of operation (Fig. 3) is concluded by setting the counter value N to a value that identifies the next phase of the motor to which a torque-producing current is to be applied, at step 118. The routine of Fig. 6A is exited at A which is also an entry point to a second routine of Fig. 6B, which performs the motor control of zone A2.

It is believed that the procedure identified in Fig. 6A, discussed above, can be used to run the motor speed up to the desired full speed operation (3600 RPM). However, it is more efficient to use another technique, that technique being the routine represented by the flow diagrams illustrated Fig. 6B.

The routine of Fig. 6B is entered at step 120, with an internal register (not shown) of the microprocessor 10 being set to a value (P) representing the period of rotation of the motor M. At the time step 120 is entered (immediately preceded by the exit of step 118, Fig. 6A), the microprocessor has information as to the rotational velocity of the motor M and the next sequential phase (a torque-producing current).

At step 124 torque-producing current is applied to the phase identified by the phase value N which, in the initial entry of the procedure of Fig. 6B was obtained in the exit step 118 of the procedure of Fig. 6A.

Briefly, the procedure of zone A2 involves comparing the amplitude of the current through the motor, responsive to application of a torque-producing current, to a predetermined value. The motor current, as illustrated in Fig. 5, by the curves S = S1, S = S2 and S = S3 will exhibit an initial rise 54, followed by a leveling off 56. As the rotor (not shown) of the motor M responds to the torque produced by the application of current, it will rotate toward its corresponding stable position. When that stable position is approached, the back-EMF is reduced, and the current level rises. This indicates that torque-producing current must be switched from the particular phase (K) to which current is being presently applied to the next sequential phase (K + 1). The times between the initial rise 54 of current through the motor to the secondary rise 58 is relatively substantial in terms of microprocessor time (beginning at approximately 6 ms up to approximately 1 to 2 ms at full RPM). Accordingly, during the portion 56 of each current curve (Fig. 5) the microprocessor can be used for other operations. Therefore, the microprocessor 10 can use windowing; that is, after switching torque-producing current from one phase to another, it can leave to perform other operations, returning at a particular time to begin looking for the secondary rise 58 of motor current. However, as motor speed increases, motor current will decrease (due to the increase in back-EMF), as indicated by the curves S = S1, S = S2 and S = S3, where S is the motor speed and the motor speed S1 is less than the motor speed S2 which in turn is less than the motor speed S3. The procedure of Fig. 6B includes a technique for moving the "window" used by the microprocessor 10 to look for the secondary rise of current 58 toward the initial rise 54.

Thus, at step 122 (Fig. 6B), to compensate for the declining value of the knee of the secondary rise 58 as the motor speed increases, a switch value $C'$ is calculated using the formula

$$C' = C_0 - L/P$$

where

$C_0$ is the static motor current value determined in step 100 (Fig. 6A),

L is a predetermined value determined by the characteristics of the motor construction and the environment in which the motor is used, and

P is the period value previously set in step 120 to 6 ms and, as will be seen, modified as motor speed increases.

Motor current (I) is then monitored, through the SPIN SNS signal received at the A/D 20 of the microprocessor 10 and compared to the value of $C'$ calculated in step 122. If the measured motor current I does not exceed the value $C'$, the monitoring procedure continues. However, if the test at step 128 determined that the motor current I does exceed the value $C'$, indicating that the knee of the secondary rise 58 is reached, the test of step 128 falls through to step 130, where the phase number is incremented (i.e. the internal counter of the microprocessor 10 is run as a modulo 6 counter)-,and the torque producing current switched (through the manipulation of the transistors Q1-Q6 of the switching section 40 of spin motor driver 24-Figs. 1 and 2) to the next sequential phase.

At step 134, the period of value P is recalculated to account for the expected increase of motor speed, at step 136 the microprocessor waits (or more accurately, is allowed to perform other operations) for a time period determined by the period value P, and at step 138 a test is made, using the period value P to determine if full speed operation (3600 RPM) is attained. If not, the procedure returns to step 122 to recalculate the current value of $C'$, to account for the expected motor speed increase (which, in turn, will lower the knee of the secondary current rise 58 (Fig. 5) and steps 126-138 are performed again.

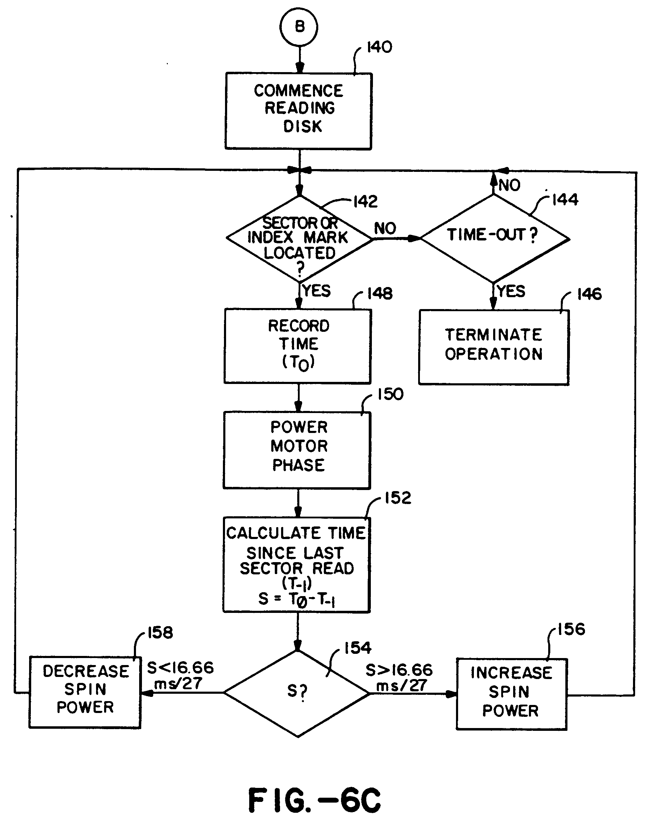

The operation of the procedure shown in Fig. 6B continues until, at step 138, it is determined that motor speed has reached 3600 RPM. If so, the procedure of Fig. 6B is exited in favor of the procedure shown in Fig. 6C which is the 3600 RPM maintenance procedure.

The procedure of Fig. 6C obtains the necessary feedback from information written upon the hard-disk media being driven by the motor M. Thus, before entering a discussion of the procedure of Fig. 6C, a discussion of what is written and the relationship to the motor will be beneficial.

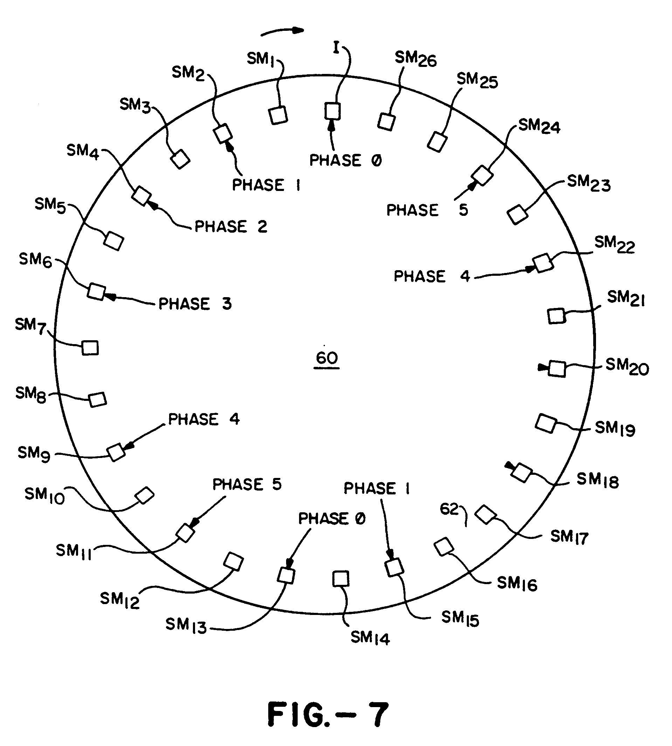

The hard-disk system with which the motor M and invention can be used can be multiple disk, providing multiple surfaces carrying magnetic media. One such surface is shown at 60. During manufacture of the hard-disk system with which the present invention would be incorporated, a number of concentric tracks of information, one of which is illustrated in Fig. 7 as track 62, are written on the surface 60. The information written on each track includes an index mark I, and 26 sector marks $SM_1$, ..., $SM_{26}$, making a total of 27 marks. The index mark I is written at a location that corresponds substantially to one phase position of the rotor used to drive the hard-disk that carries surface 60. Thus, the index mark I as well as the sector marks $SM_1$, ..., $SM_{26}$, provide positional information of the rotor. The index mark I and sector marks $SM_1$, ..., $SM_{26}$ each include approximately 60 bytes of information, and there are 512 bytes reserved for a user between each of the index and sector marks.

Turning now to Fig. 6C, the procedure there illustrated, which is entered from the procedure from Fig. 6B begins at step 140, in which the track 62 (which could be any of the tracks on the surface 60) is continually read in an attempt to find the index mark I or one of the sector marks $SM_1$, ..., $SM_{26}$. Each sector or index mark is compared to the bit pattern of the index mark I and includes data identifying it (or not identifying it, as the case may be) with an associated motor phase. Thus, for example, the index mark I and sector mark $SM_{13}$ include data identifying them with motor phase $\emptyset$. In similar fashion, sector marks $SM_2$ and $SM_{15}$ are identified with phase 1, and so on.

Under continued control of the microprocessor 10, the search of step 142 continues until one of a predetermined number of the sector marks and index mark is located. It will be noted that, as indicated above, a three-phase DC motor will have 12 phase positions (two for each power phase). However, as indicated in Fig. 7, there are 27 substantially equally spaced markers (index mark I and sector marks $SM_1$, ..., $SM_{26}$) recorded for each track 62. Only certain of those markers are used for motor synchronization. From the index mark, there is determined a pattern of 2,2,2,3 from the index mark I that is used to sequentially switch the motor phases to which the torque-producing current is applied. Thus, for example, as illustrated in Fig. 6, if the index mark I is used to identify application of a current-producing torque to phase $\emptyset$, sector marks $SM_2$, $SM_4$, $SM_6$, $SM_9$ $SM_{11}$, and $SM_{13}$ are used for switching to phases 1,2,3,4, 5, and 0, respectively. In similar fashion, sector mark $SM_{15}$, $SM_{18}$, $SM_{20}$, $SM_{22}$, and $SM_{24}$ will switch application of torque-producing current to phases 1, 2, 3, 4, and 5, respectively.

The search procedure includes a step 144 that tests for the amount of time to locate the index or one of the sector marks. If that time is exceeded, motor operation is terminated by the microprocessor 10 at step 146,i.e. the commutation of the motor is stopped and the media rotation is allowed to spin down.

If, on the other hand, as will be more usually the case, the index mark or one of the predetermined sector marks I, $SM_2$, $SM_4$, ..., $SM_{24}$) is found, the time is recorded and saved by the microprocessor 10 in step 148. Next, at step 150, a torque-producing current is switched by the microprocessor 10 to the motor phase identified by data included in the index or sector mark.

At step 152 the time $(T_{-1})$ of the last located index or sector mark and the time $(T_\emptyset)$ of the present located index or sector mark are used to calculate the sector time period $T_o - T_{-1}$ from this value,the rotational sector speed (S) of the disk 60 is indicated.

The microprocessor 10, in step 154, then determines if the rotational sector speed (S) of the disk 60 is too slow (i.e., if S is greater than 16.66 ms/27). If so, disk speed is increased in step 156 by the microprocessor 10 by providing a SPIN CTL signal to section 42 (Fig. 2) of an appropriate width. If, on the other hand, S is found to be less than the ideal time since the last index or sector mark, motor speed is decreased in step 158 by the microprocessor 10 by providing a SPIN CTL signal with a smaller pulse width.

## Claims

1. A brushless DC motor (M) having multiple stator windings (A,B,C), a rotor and apparatus for controlling ordered application of electrical current to the windings (A, B, C), said apparatus comprising:

    circuit means (40) coupled to the stator windings (A,B,C) for selectively creating current paths therethrough in response to control signals;

    sensing means ($R_s$,20) coupled to the DC motor (M) for producing a sense signal indicative of current conducted by the DC motor (M); and

    control means (10) coupled to the circuit means (40) and to the sensing means ($R_s$,20) for providing the control signals in a manner to cause current to flow through current paths selectively formed by the circuit means (40) in response to the control signals, to effect rotation of the rotor; characterised in that

    the control means (10) includes means for producing control signals to cause the selective application of short current pulses to the stator windings (A, B, C) and for monitoring the sense signal to determine which of the current pulses produces a highest amplitude sense signal relative to those of the other current pulses, the control means being operable in response to said determination to provide predetermined control signals to the circuit means.

2. A motor as claimed in claim 1, wherein said predetermined control signals cause a torque-producing current to flow through a current path chosen in dependence on which of the current pulses produces the highest amplitude sense signal.

3. A motor as claimed in claim 2, wherein each said current path corresponds to a respective motor phase, and the said torque-producing current is applied to the second phase after the phase in which the current pulse produces the highest amplitude signal.

4. A motor as claimed in claim 1, 2 or 3, wherein the highest amplitude sense pulse identifies the rotational orientation of said rotor to said stator windings.

5. A motor as claimed in claim 4, wherein said control means, in response to said monitoring means, identifies a subset of possible rotational positions of said rotor with respect to said stator windings, and wherein said control means further includes microprocessor means for identifying the one rotational position of the rotor from said subset of possible rotational positions.

6. A motor as claimed in any preceding claim, wherein said current pulses are applied through a respective phase pair of said windings as selected by said control means, said monitoring means monitoring the sense signal of each said phase pair of windings.

7. A motor as claimed in any preceding claim, wherein said monitoring means detects the peak current of said sense signal.

8. A motor of any preceding claim, wherein the multiple stator windings have first and second winding ends, said first ends of windings being connected together and wherein the rotor includes a plurality of magnets.

9. A motor of claim 8, wherein said short current pulses are applied to each of said second ends of said windings.

10. A motor of claim 9, wherein said sensing means (Rs, 20) is coupled to each of said second ends of said windings, for sensing the currents in said windings in response to the application of said short current pulses.

11. A motor of claim 8, 9 or 10, wherein said short current pulses are selectively applied to pairs of said second ends of said windings such that said short current pulse is serially conducted through two of said windings via their respective first ends.

12. A motor of any preceding claim, wherein said control means (10), responsive to said monitoring means, selectively determines a commutation order of applying power to said windings to rotate said rotor in a predetermined direction.

13. A motor of claim 12, wherein said control means (10) relies exclusively on said monitoring means for determining the rotational orientation of said rotor with respect to said stator windings.

14. A motor as claimed in any preceding claim, wherein after said motor has reached a predetermined speed said control means stops producing said control signals for causing said short current pulses to be applied to said stator windings, and produces control signals to cause torque-producing currents to be supplied to said phases, said control means monitoring said sense signal, and, when said sense signals increases above a predetermined value, issuing control signals to apply said torque-producing current to a new phase.

15. A motor as claimed in claim 14, wherein said new phase is the next successive phase.

16. A motor as claimed in any preceding claim, wherein said motor drives a hard-disk, and wherein, when said motor has reached a predetermined speed, said control means stops issuing control signals on the basis of said sense signals, and issues signals on the basis of data read from the disk.

17. A method for initiating and controlling the rotation of a rotor of a brushless DC motor of the type having multiple stator windings, related as phases, for conducting torque-producing current therethrough, characterised by the steps of:

   sequentially powering each phase of the DC motor for a short predetermined time period;

   obtaining a peak amplitude value of the current conducted by the motor when a phase is powered during each corresponding short predetermined time period:

   determining a one peak amplitude value having a magnitude greater than the other peak amplitude values; and

   applying a torque-producing current to the DC motor in a phase determined by the determined one peak amplitude value.

**18.** A method according to claim 17, wherein said torque-producing current is applied in the second phase from the phase producing the peak amplitude current.

**19.** A method according to claim 17 or 18, wherein, when said motor reaches a predetermined speed, the sequential powering of each phase for a short period is stopped, and a torque-producing current is applied to each phase until the current conducted by the motor is determined to be greater than a reference value, at which time the torque-inducing current is applied to a different phase.

**20.** A method according to claim 19, wherein said different phase is the next sequential phase.

**21.** A method according to any of claims 17 to 20, wherein said motor drives a hard disk, and wherein, when said motor has reached a predetermined speed, the motor speed is controlled in dependence on data read from said disk.

**Patentansprüche**

**1.** Bürstenloser Gleichstrommotor (M) mit mehreren Statorwicklungen (A, B, C), einem Rotor und einer Einrichtung zum Steuern eines geordneten Zuführens von elektrischem Strom zu den Wicklungen (A, B, C), wobei die Einrichtung umfaßt:
- Schaltungsmittel (40), die mit den Statorwicklungen (A, B, C) gekoppelt sind, zum wahlweisen Erzeugen von Stromwegen durch diese in Antwort auf Steuersignale;
- mit dem Gleichstrommotor (M) gekoppelte Meßmittel (Rs, 20) zum Erzeugen eines Meßsignals, welches für den durch den Wechselstrommotor (M) geleiteten Strom bezeichnend ist; und
- Steuermittel (10), welche mit den Schaltungsmitteln (40) und den Meßmitteln (Rs, 20) gekoppelt sind, zum Liefern der Steuersignale in einer Weise, die verursacht, daß Strom durch die wahlweise durch das Schaltungsmittel (40) in Antwort auf die Steuersignale gebildeten Stromwege fließt, um eine Rotation des Rotors zu bewirken,
  **dadurch gekennzeichnet**,
  daß das Steuermittel (10) Mittel zum Erzeugen von Steuersignaien umfaßt, um das wahlweise Anlegen von kurzen Stromimpulsen an die Statorwicklungsn (A, B, C) zu verursachen, und zum Überwachen des Meßsignals, um zu bestimmen, welcher der Stromimpulse ein Meßsignal mit einer höchsten Amplitude relativ zu den der anderen Stromimpulse erzeugt, wobei das Steuermittel in Antwort auf diese Bestimmung zur Abgabe vorbestimmter Steuersignale an die Schaltungsmittel betätigbar ist.

**2.** Motor nach Anspruch 1, worin die vorbestimmten Steuersignale verursachen, daß ein Drehmoment-erzeugender Strom durch einen in Abhängigkeit davon, welcher der Stromimpulse das Meßsignal mit der höchsten Amplitude erzeugt, ausgewählten Stromweg fließt.

**3.** Motor nach Anspruch 2, worin jeder der Stromwege einer jeweiligen Motorphase entspricht, und der Drehmomenterzeugende Strom der zweiten Phase nach der Phase, in welcher der Stromimpuls das Signal mit der höchsten Amplitude erzeugt, zugeführt wird.

**4.** Motor nach Anspruch 1, 2 oder 3, worin der Meßimpuls mit der höchsten Amplitude die Rotationsrichtung des Rotors bezüglich der Statorwicklungen angibt.

**5.** Motor nach Anspruch 4, worin das Steuermittel in Antwort auf das Überwachungsmittel eine Teilmenge möglicher Rotationsstellungen des Rotors bezüglich der Statorwicklungen feststellt, und worin das Steuermittel ferner Mikroprozessormittel umfaßt zum Identifizieren der einen Drehstellung des Rotors aus der Teilmenge möglicher Drehstellungen.

**6.** Motor nach einem der vorhergehenden Ansprüche, worin die Stromimpulse durch ein jeweiliges durch das Steuermittel ausgewähltes Phasenpaar der Wicklungen zugeführt werden, wobei das Überwachungsmittel das Meßsignal von jedem Phasenpaar der Wicklungen überwacht.

**7.** Motor nach einem der vorhergehenden Ansprüche, worin das Überwachungsmittel den Spitzenstrom des Meßsignals erfaßt.

**8.** Motor nach einem der vorhergehenden Ansprüche, worin die mehreren Statorwicklungen erste und zweite Wicklungsenden aufweisen, wobei die ersten Wicklungsenden miteinander verbunden sind, und worin der Rotor eine Mehrzahl von Magneten umfaßt.

**9.** Motor nach Anspruch 8, worin die kurzen Stromimpulse an jedem der zweiten Enden der Wicklungen angelegt werden.

10. Motor nach Anspruch 9, worin das Meßmittel (Rs, 20) mit jedem der zweiten Enden der Wicklungen gekoppelt ist zum Messen der Ströme in den Wicklungen in Antwort auf das Anlegen der kurzen Stromimpulse.

11. Motor nach Anspruch 8, 9 oder 10, worin die kurzen Stromimpulse wahlweise derart an den Paaren der zweiten Enden der Wicklungen angelegt werden, daß der kurze Stromimpuls seriell durch zwei der Wicklungen über deren jeweilige erste Enden geleitet wird.

12. Motor nach einem der vorhergehenden Ansprüche, worin das Steuermittel (10) in Antwort auf das Überwachungsmittel wahlweise eine Schaltreihenfolge des Zuführens von Energie zu den Wicklungen bestimmt, um den Rotor in einer vorbestimmten Richtung zu drehen.

13. Motor nach Anspruch 12, worin das Steuermittel (10) sich zum Bestimmen der Drehrichtung des Rotors bezüglich der Statorwicklungen ausschließlich auf das Überwachungsmittel stützt.

14. Motor nach einem der vorhergehenden Ansprüche, worin, nachdem der Motor eine vorbestimmte Drehzahl erreicht hat, das Steuermittel das Erzeugen der Steuersignale beendet, um zu verursachen, daß die kurzen Stromimpulse an die Statorwicklungen angelegt werden, und Steuersignale erzeugt, um zu verursachen, daß Drehmoment-erzeugende Ströme zu den Phasen geleitet werden, wobei das Steuermittel das Meßsignal überwacht, und dann, wenn die Meßsignale über einen vorbestimmten Wert zunehmen, Steuersignale abgibt, um den Drehmoment-erzeugenden Strom einer neuen Phase zuzuführen.

15. Motor nach Anspruch 14, worin die neue Phase die nächste nachfolgende Phase ist.

16. Motor nach einem der vorhergehenden Ansprüche, worin der Motor eine Festplatte antreibt, und worin dann, wenn der Motor eine vorbestimmte Drehzahl erreicht hat, das Steuermittel das Abgeben von Steuersignalen auf der Grundlage der Meßsignale beendet und Signale auf der Grundlage von von der Platte gelesenen Daten abgibt.

17. Verfahren zum Starten und Steuern der Rotation eines Rotors eines bürstenlosen Gleichstrommotors des Typs mit mehreren als Phasen bezeichneten Statorwicklungen, um Drehmoment-erzeugende Ströme durch diese zu leiten, **gekennzeichnet durch** die Schritte:

- sequentielles Antreiben jeder Phase des Gleichstrommotors für eine kurze vorbestimmte Zeitdauer;
- Erhalten eines Amplitudenspitzenwerts des durch den Motor geleiteten Stroms, wenn eine Phase während jeder entsprechenden kurzen, vorbestimmten Zeitdauer angetrieben wird;
- Bestimmen eines Amplitudenspitzenwerts mit einer Größe die größer ist, als andere Amplitudenspitzenwerte; und
- Zuführen eines Drehmoment-erzeugenden Stroms zu dem Gleichstrommotor in einer durch den bestimmten einen Amplitudenspitzenwert bestimmten Phase.

18. Verfahren nach Anspruch 17, worin der Drehmomenterzeugende Strom in der zweiten Phase nach der den Spitzenamplitudenstrom erzeugenden Phase zugeführt wird.

19. Verfahren nach Anspruch 17 oder 18, worin dann, wenn der Motor eine vorbestimmte Drehzahl erreicht, das sequentielle Antreiben jeder Phase für eine kurze Zeitdauer beendet wird und jeder Phase ein Drehmoment-erzeugender Strom zugeführt wird, bis bestimmt wird, daß der durch den Motor geleitete Strom größer ist als ein Referenzwert, wobei in diesem Zeitpunkt der Drehmoment-erzeugende Strom zu einer anderen Phase geleitet wird.

20. Verfahren nach Anspruch 19, worin die andere Phase die nächste sequentielle Phase ist.

21. Verfahren nach einem der Ansprüche 17 bis 20, worin der Motor eine Festplatte antreibt, und worin dann, wenn der Motor eine vorbestimmte Drehzahl erreicht hat, die Motordrehzahl in Abhängigkeit von von der Platte gelesenen Daten gesteuert wird.

**Revendications**

1. Moteur à courant continu sans balais (M) ayant de multiples enroulements de stator (A, B, C), un rotor et un appareil pour commander l'application ordonnée de courant électrique aux enroulements (A, B, C), ledit appareil comprenant:

des moyens (40) formant circuit couplés aux enroulements de stator (A, B, C) pour créer sélectivement des trajets du courant qui les traversent en réponse à des signaux de commande;

des moyens de détection (Rs, 20) couplés au moteur à courant continu (M) pour Produire un signal de détection indicateur du courant passant par le moteur à courant continu (M); et

un moyen de commande (10) couplé aux moyens formant circuit (40) et aux moyens de détection (Rs, 20) pour fournir les signaux de commande de manière à ce que le courant circule dans des trajets de courant sélectivement formés par les moyens (40) formant circuit en réponse aux signaux de commande, pour effectuer la rotation du rotor; caractérisé en ce que

le moyen de commande (10) comporte un moyen pour produire des signaux de commande entraînant l'application sélective de courtes impulsions de courant aux enroulements de stator (A, B, C) et pour contrôler le signal de détection afin de déterminer celle des impulsions de courant qui produit un signal de détection ayant l'amplitude la plus élevée par rapport à celles des autres impulsions de courant, le moyen de commande pouvant fonctionner en réponse à ladite détermination pour fournir des signaux de commande prédéterminés aux moyens formant circuit.

2. Moteur selon la revendication 1, dans lequel lesdits signaux de commande prédéterminés conduisent un courant producteur de couple à circuler dans un trajet de courant choisi en fonction de celle des impulsions de courant qui produit le signal de détection de plus grande amplitude.

3. Moteur selon la revendication 2, dans lequel chacun desdits trajets de courant correspond à une phase respective du moteur, et ledit courant producteur de couple est appliqué à la seconde phase après la phase au cours de laquelle l'impulsion de courant produit le signal de plus grande amplitude.

4. Moteur selon la revendication 1, 2 ou 3, dans lequel l'impulsion de détection de plus grande amplitude identifie l'orientation de rotation dudit rotor par rapport auxdits enroulements de stator.

5. Moteur selon la revendication 4, dans lequel ledit moyen de commande, en réponse audit moyen de contrôle, identifie une sous-série de positions de rotation possibles dudit rotor par rapport auxdits enroulements de stator, et dans lequel ledit moyen de commande comporte en outre un moyen formant microprocesseur pour identifier la première position de rotation du rotor à partir de ladite sous-série de positions de rotation possibles.

6. Moteur selon l'une quelconque des revendications précédentes, dans lequel lesdites impulsions de courant sont appliquées par l'intermédiaire d'une paire de phases respectives desdits enroulements tels que sélectionnés par ledit moyen de commande, ledit moyen de contrôle contrôlant le signal de détection de chaque paire de phases d'enroulements.

7. Moteur selon l'une quelconque des revendications précédentes, dans lequel ledit moyen de contrôle détecte le courant de crête dudit signal de détection.

8. Moteur selon l'une quelconque des revendications précédentes, dans lequel les multiples enroulements de stator ont des premières et secondes extrémités d'enroulement, lesdites premières extrémités des enroulements étant reliées ensemble et dans lequel le rotor comporte plusieurs aimants.

9. Moteur selon la revendication 8, dans lequel lesdites courtes impulsions de courant sont appliquées à chacune desdites secondes extrémités desdits enroulements.

10. Moteur selon la revendication 9, dans lequel ledit moyen de détection (Rs, 20) est couplé à chacune desdites secondes extrémités desdits enroulements, pour détecter les courants dans lesdits enroulements en réponse à l'application desdites courtes impulsions de courant.

11. Moteur selon la revendication 8, 9 ou 10, dans lequel lesdites courtes impulsions de courant sont sélectivement appliquées aux paires desdites secondes extrémités desdits enroulements de telle sorte que lesdites courtes impulsions de courant passent en série à travers deux desdits enroulements par l'intermédiaire de leurs premières extrémités respectives.

12. Moteur selon l'une quelconque des revendications précédentes, dans lequel ledit moyen de commande (10), sensible audit moyen de contrôle, détermine sélectivement un ordre de commutation d'application de puissance auxdits enroulements pour faire tourner le rotor dans un sens prédéterminé.

13. Moteur selon la revendication 12, dans lequel ledit moyen de commande (10) repose exclusivement sur ledit moyen de contrôle pour déterminer l'orientation de rotation dudit rotor par rapport auxdits enroulements de stator.

**14.** Moteur selon l'une quelconque des revendications précédentes, dans lequel après que le moteur a atteint une vitesse prédéterminée, ledit moyen de commande arrête de produire lesdits signaux de commande pour que lesdites courtes impulsions de courant soient appliquées auxdits enroulements de stator, et produit des signaux de commande afin que des courants producteurs de couple soient appliqués auxdites phases, ledit moyen de commande contrôlant ledit signal de détection, et, lorsque lesdits signaux de détection croissent au-dessus d'une valeur prédéterminée, délivre des signaux de commande pour appliquer ledit courant producteur de couple à une nouvelle phase.

**15.** Moteur selon la revendication 14, dans lequel ladite nouvelle phase est la phase successive suivante.

**16.** Moteur selon l'une quelconque des revendications précédentes, dans lequel ledit moteur entraîne un disque dur, et dans lequel, lorsque ledit moteur a atteint une vitesse prédéterminée, ledit moyen de commande arrête de délivrer des signaux de commande sur la base desdits signaux de détection, et délivre des signaux sur la base de données lues sur le disque.

**17.** Procédé pour amorcer et commander la rotation d'un rotor d'un moteur à courant continu sans balais du type ayant de multiples enroulements de stator, appelés phases, pour y faire passer un courant producteur de couple, caractérisé par les étapes suivantes:

alimentation séquentielle de chaque phase du moteur à courant continu pendant une courte période de temps prédéterminée;

obtention d'une valeur d'amplitude de crête du courant passant par le moteur lorsqu'une phase est alimentée au cours de chaque courte période de temps prédéterminée;

détermination d'une valeur d'amplitude de crête ayant une amplitude supérieure à celle des autres valeurs d'amplitude de crête; et

application d'un courant producteur de couple au moteur à courant continu dans une phase déterminée par la valeur d'amplitude de crête déterminée.

**18.** Procédé selon la revendication 17, dans lequel ledit courant producteur de couple est appliqué dans la seconde phase à partir de la phase produisant le courant d'amplitude de crête.

**19.** Procédé selon la revendication 17 ou 18, dans lequel, lorsque ledit moteur atteint une vitesse prédéterminée, l'alimentation séquentielle de chaque phase pendant une courte période de temps est arrêtée, et un courant producteur de couple est appliqué à chaque phase jusqu'à ce que le courant passant par le moteur soit déterminé comme étant supérieur à une valeur de référence, le courant induisant un couple étant appliqué à une phase différente à cet instant.

**20.** Procédé selon la revendication 19, dans lequel ladite phase différente est la phase séquentielle suivante.

**21.** Procédé selon l'une quelconque des revendications 17 à 20, dans lequel ledit moteur entraîne un disque dur, et dans lequel, lorsque ledit moteur a atteint une vitesse prédéterminée, la vitesse du moteur est commandée en fonction de données lues sur ledit disque.

**FIG.—1**

**FIG.—2**

FIG. — 3

FIG. — 4

FIG. — 5

15

## FIG.—6A

START

SAMPLE STATIC MOTOR CURRENT ($C_0$) AND SAVE —100

N=0 —102

POWER MOTOR PHASE N FOR 200μS —104

MEASURE PEAK MOTOR CURRENT ($C_N$) AND SAVE —106

N=N+1 —108

N=6? —110

NO / YES

DETERMINE LARGEST PEAK AMPLITUDE OF $C_N$ (N=0-5)=$C_K$ —112

POWER MOTOR PHASE $(K+2)_6$ FOR 4.8 ms —114

SPEED= 720 RPM? —116

NO → TERMINATE MOTOR POWER

YES

N=K+2 —118

A

## FIG.—6B

A

P=6ms —120

POWER MOTOR PHASE N (N=0-6) —124

$C'=C_0-L/P$ —122

MEASURE MOTOR CURRENT (I) —126

I<C'? —128

YES / NO

N=N+1 (MODULO 6) —130

POWER MOTOR PHASE N —132

P=0.99P —134

WAIT P —136

P≤1.288ms ? —138

NO / YES

B

16

**FIG.—6C**

**FIG.- 7**